# EUROPÄISCHE PATENTSCHRIFT

(11) **EP 4 624 341 B1**
(45) Veröffentlichungstag und Bekanntmachung des Hinweises auf die Patenterteilung: **04.11.2026**
(21) Anmeldenummer: 24218412.5
(22) Anmeldetag: 09.12.2024
(51) Int. Cl.: B64G 1/52, B64G 1/22, B64G 1/66, F41H 11/00

(54) **VERTEIDIGUNGSVORRICHTUNG FÜR EINEN SATELLITEN, SYSTEM, UND VERWENDUNG EINES TÄUSCHKÖRPERS ZUR SATELLITENVERTEIDIGUNG**
SATELLITE DEFENSE DEVICE, SYSTEM, AND USE OF A SATELLITE DEFENCE DECOY
DISPOSITIF DE DÉFENSE POUR SATELLITE, SYSTÈME, ET UTILISATION D'UN LEURRE DE DÉFENSE SATELLITE

(30) Priorität: 27.03.2024 DE 102024000991
(43) Veröffentlichungstag der Anmeldung: 01.10.2025
(73) Patentinhaber: MBDA Deutschland GmbH, 86529 Schrobenhausen (DE)
(72) Erfinder: NEBEL, Florian, 85298 Scheyern (DE)
(74) Vertreter: Isarpatent

(56) Entgegenhaltungen:
- US-B1- 11 662 183
- US-B1- 6 231 002
- US-B1- 7 916 065

## Beschreibung

### TECHNISCHES GEBIET DER ERFINDUNG

Die vorliegende Erfindung betrifft eine Verteidigungsvorrichtung für einen Satelliten. Zudem betrifft die vorliegende Erfindung ein System zur Verteidigung eines Satelliten. Des Weiteren betrifft die Erfindung die Verwendung eines Täuschkörpers zur Satellitenverteidigung.

### HINTERGRUND DER ERFINDUNG

Weltrauminfrastruktur, die beispielsweise zur Satellitenkommunikation und - navigation, zur Erdbeobachtung, oder dergleichen dienen kann, wird mittlerweile umfangreich von technischen Systemen genutzt und kann demensprechend als kritische, d.h. besonders bedeutende bzw. schützenswerte, Infrastruktur erachtet werden. Die Weltrauminfrastruktur, wie etwa Satelliten, Raumstationen oder dergleichen, kann jedoch Bedrohungen ausgesetzt sein. Neben herumfliegenden Weltraumschrott kann eine solche Bedrohung auch durch militärische Mittel oder andere Störer gegeben sein. Es besteht daher der Wunsch nach einer Möglichkeit, Bedrohungen für die Weltrauminfrastruktur zumindest zu verringern.

US 11 662 183 B1 beschreibt ein auf einem Satelliten mitgeführtes System. Es ist dazu eingerichtet, ein Objekt zu erkennen, das sich auf Kollisions- oder Nahekollisionskurs mit dem Satelliten befindet, festzustellen, ob es sich um einen feindlichen Angreifer handelt, und - falls ja - rechtzeitig eine oder mehrere Gegenmaßnahmen autonom einzusetzen, um einen solchen Angreifer abzuwehren, abzulenken oder zu zerstören.

US 7 916 065 B1 beschreibt ein Gegenmaßnahmesystem zum Schutz eines Objekts vor einem Raketenangriff einen Täuschkörper, der eine Vielzahl von Quantenpunkten aufweist, die so ausgewählt sind, dass sie eine Strahlung mit einem Emissionsprofil aussenden, das dem Strahlungssignaturprofil des zu schützenden Objekts ähnelt. In einer weiteren Ausführungsform wird ein Verfahren zur Simulation einer Strahlungssignatur eines Objekts mittels Quantenpunkten beschrieben, wobei die Quantenpunkte dispergiert und durch eine erste Strahlung angeregt werden, sodass sie eine zweite Strahlung mit einem dem Objekt entsprechenden Profil aussenden.

US 6 231 002 B1 beschreibt ein System und Verfahren zur Verteidigung eines Fahrzeugs gegen eine sich nähernde Bedrohung. Eine sich nähernde Bedrohung wird identifiziert, anschließend wird ein starrer Körper vom Fahrzeug ausgesetzt. Mit dem Körper verbundene Mittel ermöglichen eine gesteuerte, geführte Fortbewegung, um eine Referenzachse des Körpers relativ zur Bedrohung auszurichten und den Körper im Wesentlichen senkrecht zur Referenzachse zu bewegen, um die Bedrohung zu eliminieren.

### ZUSAMMENFASSUNG DER ERFINDUNG

Aufgabe der Erfindung ist es, mit konstruktiv möglichst einfachen Mitteln eine möglichst effektive Möglichkeit zum Schutz von Weltrauminfrastruktur zu schaffen.

Diese Aufgabe wird durch die Gegenstände der unabhängigen Ansprüche gelöst.

Beispielhafte Ausführungsformen ergeben sich aus den abhängigen Ansprüchen und der nachfolgenden Beschreibung.

Gemäß einem ersten Aspekt wird eine Vorrichtung nach Anspruch 1 vorgeschlagen.

Die vorgeschlagene Vorrichtung ermöglicht es mit konstruktiv einfachen Mitteln, einen effektiven Schutz für Weltrauminfrastruktur gegen eine Bedrohung zu schaffen, die durch das Zielobjekt gegeben sein kann. Die Vorrichtung kann so betrieben werden, dass mittels des Täuschkörpers das Zielobjekt zumindest teilweise oder vollständig funktionsunfähig oder anderweitig zumindest unschädlicher gemacht wird, so dass die durch das Zielobjekt bewirkte Bedrohung zumindest teilweise oder weitestgehend beseitigt wird. Durch den wenigstens einen Täuschkörper kann die Funktion des Zielobjekts gestört oder außer Kraft gesetzt werden. Beispielsweise kann der wenigstens eine Täuschkörper dazu eingerichtet sein, ein Kommunikationssystem, wenigstens einen Sensor, oder dergleichen des Zielobjekts zumindest vorübergehend zu stören. Dadurch kann die Vorrichtung bzw. der wenigstens eine Täuschkörper das Zielobjekt "blind" und/oder "taub" machen. Die Vorrichtung kann eine Beschädigung, Fragmentation des Täuschkörpers und/oder eine Fragmentierung des Zielobjekts zumindest weitestgehend vermeiden, so dass zumindest das Risiko verringert werden kann, durch das Entgegenwirken gegen das Zielobjekt zusätzlichen Weltraumschrott zu erzeugen. Es ist auch möglich, das Zielobjekt mittels der Vorrichtung gezielt abstürzen bzw. in die Erdatmosphäre eintreten zu lassen, was wiederrum kaum oder gar keinen zusätzlichen Weltraumschrott erzeugt.

Wie hierin verwendet, kann unter dem Täuschkörper und/oder dem Raumflugkörper jeder weltraumtaugliche Flugkörper verstanden werden, der dazu eingerichtet ist, sich zu bzw. gegenüber dem Zielobjekt im Weltraum auszurichten. Der Täuschkörper und/oder Raumflugkörper kann beispielsweise ein Raumfahrzeug, eine Raumsonde, oder dergleichen sein. Der Täuschkörper und/oder Raumflugkörper kann eine weltraumtaugliche Struktur aufweisen. Zudem kann der Täuschkörper in zumindest einigen Weiterbildungen wenigstens eines der folgenden Mittel aufweisen: einen bordeigenen Antrieb, eine bordeigene Energieversorgung, ein bordeigenes Steuersystem, das dazu eingerichtet ist, den Täuschkörper zu steuern und/oder zu manövrieren, eine bordeigene Recheneinrichtung, wie etwa einen Computer, Prozessor, oder dergleichen, ein Lagekontrollsystem, z.B. Attitude Determination and Control System (ACS), ein Kommunikationssystem, ein System zur Führung, Navigation und Steuerung, z.B. Guidance Navigation and Control (GNC), und/oder wenigstens einen Suchkopf.

Der Täuschkörper und/oder Raumflugkörper kann dazu eingerichtet sein, die Zieldaten zu empfangen, beispielsweise aus der Ferne, z.B. unter Nutzung eines Kommunikationssystems, von einem bordeigenen Datenspeicher, oder dergleichen. Die Zieldaten können basierend auf wenigstens einer Erfassungseinrichtung, wie etwa einem Sensor, einem Sensornetzwerk oder dergleichen, erzeugt werden und das Zielobjekt identifizierbar machen bzw. diesem zugeordnet sein. Die Zieldaten können basierend auf Beobachtungen aus dem Weltraum und/oder von der Erde aus erzeugt werden. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden. Die Zieldaten können beispielsweise auch einen Treffpunkt, Abfangpunkt oder dergleichen des Täuschkörpers und/oder Raumflugkörpers mit dem Zielobjekt angeben, der beispielsweise basierend auf Daten der Erfassungseinrichtung, z.B. auch unter Einbeziehung astronomischen Wissens, berechnet werden kann. Die Vorrichtung kann dazu eingerichtet sein, basierend auf den Zieldaten hin zu dem Zielobjekt zu manövrieren, z.B. die Geschwindigkeit, Ausrichtung und/oder Lage des Täuschkörpers und/oder Raumflugkörpers an das Zielobjekt anzupassen. Alternativ oder zusätzlich dazu, kann die Vorrichtung auch dazu eingerichtet sein, den Täuschkörper und/oder Raumflugkörper basierend auf bordeigenen Mitteln, beispielsweise basierend auf einem bordeigenen Suchkopf, gegenüber dem Zielobjekt zu bewegen und/oder auszurichten. Suchköpfe und deren Funktion sind im vorliegenden technischen Gebiet bekannt, so dass eine genauere Beschreibung des Suchkopfes entbehrlich ist. Prinzipiell kann ein solcher Suchkopf einen oder mehrere Sensoren aufweisen. Der wenigstens eine Suchkopf kann auch als Sucher bezeichnet werden. Mittels einer Steuereinrichtung können die Sensorinformationen in Steuerbefehle umgesetzt werden, mit denen die Flugrichtung des Täuschkörpers und/oder Raumflugkörpers beeinflusst werden kann. Der Suchkopf kann eine bordeigene Zielführung erlauben.

Wie hierin verwendet, kann unter dem wenigstens einen Täuschkörper ein von dem Satelliten aus absetzbarer, z.B. ausstoßbarer oder startbarer, Körper zur bzw. als Gegenmaßnahme gegen das Zielobjekt verstanden werden. Der wenigstens eine Täuschkörper kann dazu dienen, das Zielobjekt auf sich selbst zu ziehen, um es von dem zu schützenden Satelliten abzulenken. Alternativ oder zusätzlich dazu, kann der wenigstens eine Täuschkörper dazu dienen, das Zielobjekt aktiv, d.h. durch den Einsatz wenigstens eines Störmittels, zu stören, um es dadurch von dem zu schützenden Satelliten abzulenken und/oder abzubringen. Zudem ist unter dem Täuschkörper nicht zwingend ein Verlustkörper zu verstehen. Vielmehr kann die Vorrichtung, insbesondere der Täuschkörper und/oder Raumflugkörper, dazu eingerichtet sein, eine Kollision mit dem Zielobjekt zu vermeiden.

Wie hierin verwendet, kann die Vorrichtung entweder von dem zu schützenden Satelliten selbst oder von einem dezidierten Satelliten getragen werden. Der die Vorrichtung und/oder den wenigstens einen Täuschkörper tragende Satellit kann auch als Host-Satellit bezeichnet werden.

Gemäß einer Weiterbildung kann der wenigstens eine Täuschkörper wenigstens ein elektronisches Störmittel, insbesondere wenigstens einen Störsender (engl. Jammer), aufweisen. Das wenigstens eine Störmittel, z.B. Störsender, kann dazu eingerichtet sein, das Zielobjekt zu stören. Das wenigstens eine Störmittel kann als elektronische Gegenmaßnahme gegen das Zielobjekt dienen. Beispielsweise kann das wenigstens eine Störmittel dazu eingerichtet sein, elektromagnetische Wellen auszusenden, beispielsweise in den Spektralbereichen Radar, IR und/oder UV, oder dergleichen. Zudem kann das wenigstens eine Störmittel dazu eingerichtet sein, zumindest eines von einem Kommunikationssystem, einem Navigationssystem, wie etwa GPS oder dergleichen, und einem Suchkopf zu stören. Des Weiteren kann das wenigstens eine Störmittel dazu eingerichtet sein, eine Fernzündung eines Sprengstoffs oder dergleichen des Zielobjekts zu stören.

In einer Weiterbildung kann der wenigstens eine Täuschkörper wenigstens eine Blendeinrichtung aufweisen. Die wenigstens eine Blendeinrichtung kann dazu eingerichtet sein, das Zielobjekt zu blenden. Beispielsweise kann die wenigstens eine Blendeinrichtung dazu eingerichtet sein, das Zielobjekt und/oder Komponenten desselben im IR-Spektralbereich und/oder optisch zu blenden. Die wenigstens eine Blendeinrichtung kann beispielsweise einen Laser oder dergleichen aufweisen.

Die Vorrichtung weist ferner wenigstens eine triebwerkgetriebene Startvorrichtung auf. Die wenigstens eine Startvorrichtung kann an dem Satelliten fest angeordnet und dazu eingerichtet sein, den wenigstens einen Täuschkörper abzusetzen, z.B. auszustoßen oder dergleichen. Der wenigstens eine Täuschkörper kann in dem Host-Satelliten durch die wenigstens eine Startvorrichtung integriert sein. Die wenigstens eine Startvorrichtung kann als mechanische-, elektrische- und/oder Datenschnittstelle zwischen dem Host-Satelliten und dem wenigstens einen Täuschkörper dienen. Vor dem Start kann der wenigstens eine Täuschkörper von dem Host-Satelliten, soweit erforderlich, mit Strom versorgt werden. Nach dem Start des wenigstens einen Täuschkörpers kann die Startvorrichtung als Kommunikations-Relay zwischen dem wenigstens einen Täuschkörper und dem Host-Satelliten dienen, der ggf. wiederum Signale von dem wenigstens einen Täuschkörper an z.B. eine Bodenstation weiterleiten kann. Die mechanische Schnittstelle kann den wenigstens einen Täuschkörper während der Verbringung bis zum Start arretieren. In Abhängigkeit der Zieldaten kann die Arretierung gelöst werden, und ein Antriebssystem des wenigstens einen Täuschkörpers kann diesen aus der Startvorrichtung beschleunigen. Es ist jedoch auch möglich, dass der wenigstens eine Täuschkörper nur mittels eines Triebwerks der wenigstens einen Startvorrichtung aus dieser heraus beschleunigt wird.

Die Vorrichtung ist dazu eingerichtet, die wenigstens eine Startvorrichtung über das Absetzen des wenigstens einen Täuschkörpers hinaus als Antrieb für den Satelliten weiter zu betreiben. Beispielsweise kann der wenigstens eine Täuschkörper aus der wenigstens einen Startvorrichtung freigesetzt werden, und der Satellit wird mittels des Triebwerks der Startvorrichtung von seiner ursprünglichen Position und/oder aus der Bahn des Zielobjekts wegbewegt werden. Während sich der Satellit dadurch entfernt, kann der wenigstens eine Täuschkörper am ursprünglichen Ort und/oder der ursprünglichen Bahn bleiben. Dort kann der wenigstens eine Täuschkörper beispielsweise Sensoren, die Kommunikation, usw. des Zielobjekts stören, bzw. diesem entgegenwirken.

Gemäß einer Weiterbildung kann der wenigstens eine Täuschkörper ein bordeigenes Antriebssystem aufweisen. Beispielsweise kann der Täuschkörper wenigstens ein Triebwerk oder dergleichen aufweisen. Das Antriebssystem kann zum Vortrieb und/oder zum Manövrieren des wenigstens einen Täuschkörpers eingerichtet sein.

In einer Weiterbildung kann die Vorrichtung eine Kommunikationseinrichtung aufweisen. Die Kommunikationseinrichtung kann dazu eingerichtet sein, als Kommunikations-Relay zwischen dem Täuschkörper und dem Satelliten zu dienen. Beispielsweise kann die Kommunikationseinrichtung Teil der Startvorrichtung sein oder mit dieser operativ gekoppelt sein. Nach dem Start des wenigstens einen Täuschkörpers kann die Startvorrichtung als Kommunikations-Relay zwischen dem wenigstens einen Täuschkörper und dem Host-Satelliten dienen, der ggf. wiederum Signale von dem wenigstens einen Täuschkörper an z.B. eine Bodenstation weiterleiten kann.

Gemäß einer Weiterbildung kann der Täuschkörper wenigstens einen Suchkopf aufweisen. Der wenigstens eine Täuschkörper kann dazu eingerichtet sein, sich mittels des Suchkopfes zielgeführt zu dem Zielobjekt zu positionieren und/oder auszurichten. Suchköpfe und deren Funktion sind im vorliegenden technischen Gebiet bekannt, so dass eine genauere Beschreibung des Suchkopfes entbehrlich ist. Prinzipiell kann ein solcher Suchkopf einen oder mehrere Sensoren aufweisen, die auch als Sucher bezeichnet werden können. Mittels einer Steuereinrichtung können die Sensorinformationen in Steuerbefehle umgesetzt werden, mit denen die Flugrichtung des Täuschkörpers beeinflusst werden kann. Der Suchkopf kann eine bordeigene Zielführung erlauben.

Ein zweiter Aspekt bezieht sich auf die Verwendung einer Vorrichtung zur Verteidigung eines Satelliten. Dabei wird wenigstens ein Täuschkörper, der als Raumflugkörper ausgeführt ist, von einem Satelliten getragen und basierend auf Zieldaten, die ein sich auf den zu verteidigenden Satelliten zu bewegendes Zielobjekt angeben, von dem Satelliten aus abgesetzt, um dem Zielobjekt entgegenzuwirken.

Die Vorrichtung kann gemäß dem ersten Aspekt und dessen Weiterbildungen beliebig weitergebildet werden.

Gemäß einer Weiterbildung kann die Vorrichtung von der Erde aus hin zu dem Zielobjekt gestartet und/oder verbracht werden. Hierzu kann eine Startvorrichtung und/oder eine Verbringungsvorrichtung vorgesehen sein, die zum Start und/oder Verbringen der Vorrichtung von Land, Wasser oder Luft eingerichtet sein kann. Damit kann die Vorrichtung bei Bedarf, z.B. bei Bestimmung des Zielobjekts als potenzielle Bedrohung, von der Erde aus gestartet und/oder verbracht werden.

In einer Weiterbildung kann die Vorrichtung von einem dedizierten, zweiten Satelliten getragen im Weltraum vorgehalten und von dort aus dem zu schützenden, ersten Satelliten und/oder dem Zielobjekt angenähert werden. Beispielsweise kann die Vorrichtung und/oder der diese tragende Satellit bereits in den Weltraum verbracht werden, bevor eine Bedrohung erkennbar ist bzw. ein konkreter Bedarf besteht. Dies kann mittels des dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Gemäß einer Weiterbildung kann die Vorrichtung von dem zu schützenden Satelliten selbst getragen und von dort aus abgesetzt und/oder hin zu dem Zielobjekt gestartet werden. Beispielsweise können ein oder mehrere Täuschkörper und/oder Vorrichtungen an oder auf dem zu schützenden Satelliten installiert sein. Dabei können der zu schützende Satellit und der Täuschkörper und/oder die Vorrichtung gemeinsam gestartet bzw. in den Weltraum verbracht werden. Dies bildet ein Selbstverteidigungssystem für den Satelliten, wobei das Prinzip auch auf andere Weltrauminfrastruktur anwendbar ist.

Ein dritter Aspekt stellt ein System zum Entgegenwirken gegen ein Zielobjekt im Weltraum zur Verfügung. Das System weist wenigstens eine Erfassungseinrichtung auf, die dazu eingerichtet ist, das Zielobjekt zum Erzeugen von Zieldaten zu erfassen. Zudem weist das System wenigstens einen Täuschkörper auf, der als Raumflugkörper ausgeführt sowie von einem Satelliten tragbar oder getragen ist, und basierend auf Zieldaten, die ein sich auf den zu verteidigenden Satelliten zubewegendes Zielobjekt angeben, von dem Satelliten aus absetzbar ist, und der dazu eingerichtet ist, dem Zielobjekt entgegenzuwirken.

Die wenigstens eine Erfassungseinrichtung kann wenigstens einen Sensor, ein Sensornetzwerk oder dergleichen aufweisen, die im Weltraum und/oder der Erde angeordnet sein können. Die auf der wenigstens einen Erfassungseinrichtung basierenden Zieldaten können basierend auf Beobachtungen aus dem Weltraum und/oder von der Erde aus erzeugt werden. Beispielsweise können die Zieldaten von einem Weltraumüberwachungssystem oder unter Nutzung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden.

Das System kann gemäß dem ersten Aspekt und/oder dem zweiten Aspekt und deren jeweiligen Weiterbildungen weitergebildet werden.

Gemäß einer Weiterbildung kann das System ferner eine Startvorrichtung und/oder eine Verbringungsvorrichtung aufweisen. Die Startvorrichtung und/oder Verbringungsvorrichtung kann dazu eingerichtet sein, den Täuschkörper von der Erde aus hin zu dem Zielobjekt zu starten.

In einer Weiterbildung kann das System ferner einen Satelliten aufweisen. Der Satellit kann dazu eingerichtet sein, den Täuschkörper zu tragen, wobei der Täuschkörper von dem Satellit aus hin zu dem Zielobjekt startbar ist. Hierbei kann der Täuschkörper als Selbstverteidigungssystem für den Satelliten dienen. Die Vorrichtung kann dort warten, bis das Zielobjekt in Reichweite ist und kann dann den wenigstens einen Täuschkörper von dem Satelliten aus starten.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: schematisch eine von einem Satelliten getragene, exemplarische Vorrichtung zur Verteidigung eines Satelliten gemäß einem Ausführungsbeispiel.
- Fig. 2: schematisch eine von einem Satelliten getragene, exemplarische Vorrichtung zur Verteidigung eines Satelliten gemäß einem Ausführungsbeispiel, mit abgesetztem Täuschkörper.
- Fig. 3: schematisch einen exemplarischen, abgesetzten Täuschkörper gemäß einem Ausführungsbeispiel.
- Fig. 4: schematisch einen exemplarischen, abgesetzten Täuschkörper gemäß einem Ausführungsbeispiel.
- Fig. 5: schematisch eine von einem Satelliten getragene, exemplarische Vorrichtung zur Verteidigung eines Satelliten gemäß einem Ausführungsbeispiel.
- Fig. 6: schematisch einen exemplarischen Täuschkörper gemäß einem Ausführungsbeispiel.
- Fig. 7: schematisch ein exemplarisches System mit Täuschkörper, Startvorrichtung und Erfassungseinrichtung gemäß einem Ausführungsbeispiel.
- Fig. 8: in einem Flussdiagramm mögliche Aktivitäten bezogen auf eine Vorrichtung und/oder einen Täuschkörper in einer Startvorrichtung, gemäß einem Ausführungsbeispiel.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

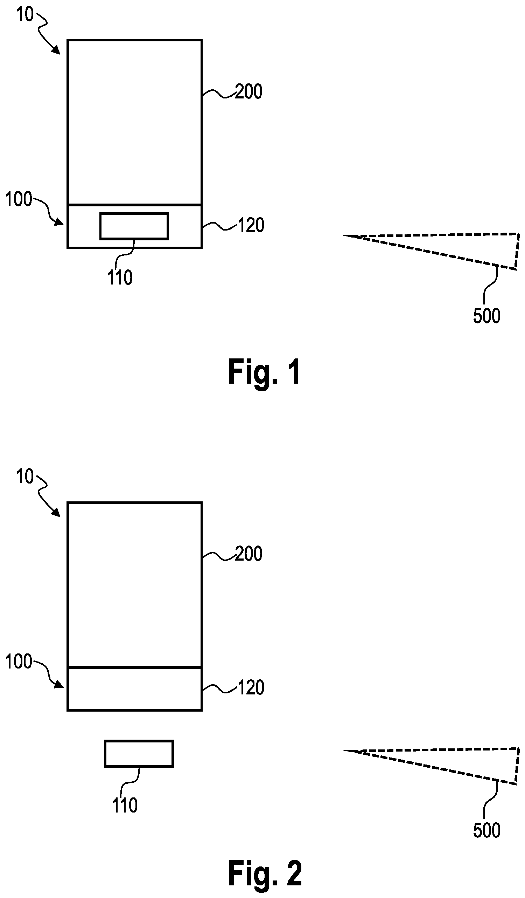

Fig. 1 zeigt in einer schematischen Ansicht eine exemplarische Vorrichtung 100, die dazu eingerichtet ist, einen Satelliten 200 gegen ein Zielobjekt 500 im Weltraum zu verteidigen. Die Vorrichtung 100 kann auch Teil eines Systems 10 zur Verteidigung des Satelliten 200 sein, das weiter unten detaillierter beschrieben wird.

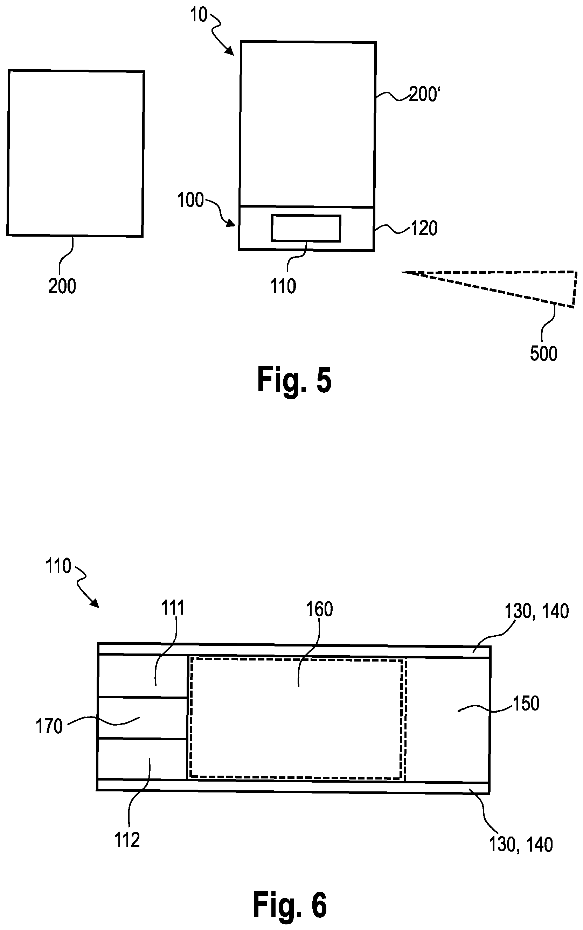

Die Vorrichtung 100 weist wenigstens einen Täuschkörper 110 auf, der als Raumflugkörper ausgeführt ist. Der wenigstens eine Täuschkörper 110 ist von einem Satelliten tragbar oder wird von einem Satelliten getragen, bei dem es sich um den zu schützenden bzw. zu verteidigenden Satelliten 200 gemäß Fig. 1 handeln kann. Es sei jedoch angemerkt, dass der wenigstens eine Täuschkörper 110 auch von einem dedizierten, zweiten Satelliten 200' (siehe Fig. 5) getragen und von dort aus zur Verteidigung des zu schützenden bzw. zu verteidigenden, ersten Satelliten 200 abgesetzt wird. Die Vorrichtung 100 und/oder der wenigstens eine Täuschkörper 110 ist dazu eingerichtet, basierend auf Zieldaten, die das sich auf den zu verteidigenden Satelliten 200 zubewegende Zielobjekt angeben, von dem Satelliten 200, 200' aus absetzbar. Die Vorrichtung 100 und/oder der wenigstens eine Täuschkörper 110 ist dazu eingerichtet, dem Zielobjekt 500 entgegenzuwirken.

Die Vorrichtung 100 weist ferner wenigstens eine triebwerkgetriebene Startvorrichtung 120 auf. Die wenigstens eine Startvorrichtung 120 kann an dem Satelliten 200, 200' fest angeordnet und dazu eingerichtet sein, den wenigstens einen Täuschkörper 110 abzusetzen, z.B. auszustoßen oder dergleichen. Der wenigstens eine Täuschkörper 110 kann in dem Satelliten 200, 200', der auch als Host-Satellit bezeichnet werden kann, durch die wenigstens eine Startvorrichtung integriert sein. Die wenigstens eine Startvorrichtung 120 kann als mechanische-, elektrische- und/oder Datenschnittstelle zwischen dem Host-Satelliten und dem wenigstens einen Täuschkörper 110 dienen. Vor dem Start kann der wenigstens eine Täuschkörper 110 von dem Satelliten 200, 200', soweit erforderlich, mit Strom versorgt werden. Nach dem Start des wenigstens einen Täuschkörpers 110 kann die Startvorrichtung 120 als Kommunikations-Relay zwischen dem wenigstens einen Täuschkörper 110 und dem Satelliten 200, 200' dienen, der ggf. wiederum Signale von dem wenigstens einen Täuschkörper 110 an z.B. eine Bodenstation weiterleiten kann. Die mechanische Schnittstelle kann den wenigstens einen Täuschkörper 110 während der Verbringung bis zum Start arretieren. In Abhängigkeit der Zieldaten kann die Arretierung gelöst werden, und ein Antriebssystem des wenigstens einen Täuschkörpers 110 kann diesen aus der Startvorrichtung beschleunigen. Es ist jedoch auch möglich, dass der wenigstens eine Täuschkörper 110 nur, oder zusätzlich, mittels eines Triebwerks der wenigstens einen Startvorrichtung 120 aus dieser heraus beschleunigt wird.

Fig. 2 zeigt die Vorrichtung 100 aus Fig. 1 mit abgesetztem Täuschkörper 110.

Der Täuschkörper 110 kann von der Startvorrichtung 120 abgesetzt, z.B. ausgestoßen, werden, beispielsweise mittels eines Triebwerks derselben. Der Täuschkörper 110 kann sich jedoch auch mittels eines bordeigenen Antriebs von der Startvorrichtung 120 bzw. von dem Satelliten 200, 200' absetzen.

Die Vorrichtung 100 ist dazu eingerichtet, die wenigstens eine Startvorrichtung 120 über das Absetzen des wenigstens einen Täuschkörpers 110 hinaus als Antrieb für den Satelliten 200, 200' weiter zu betreiben. Beispielsweise kann der wenigstens eine Täuschkörper 110 aus der wenigstens einen Startvorrichtung 120 freigesetzt werden, und der Satellit 200, 200' wird mittels des Triebwerks der Startvorrichtung 120 von seiner ursprünglichen Position und/oder aus der Bahn des Zielobjekts wegbewegt. Während sich der Satellit 200, 200' dadurch entfernt, kann der wenigstens eine Täuschkörper 110 am ursprünglichen Ort und/oder der ursprünglichen Bahn bleiben. Dort kann der wenigstens eine Täuschkörper 110 beispielsweise Sensoren, die Kommunikation, usw. des Zielobjekts 500 stören, bzw. diesem entgegenwirken.

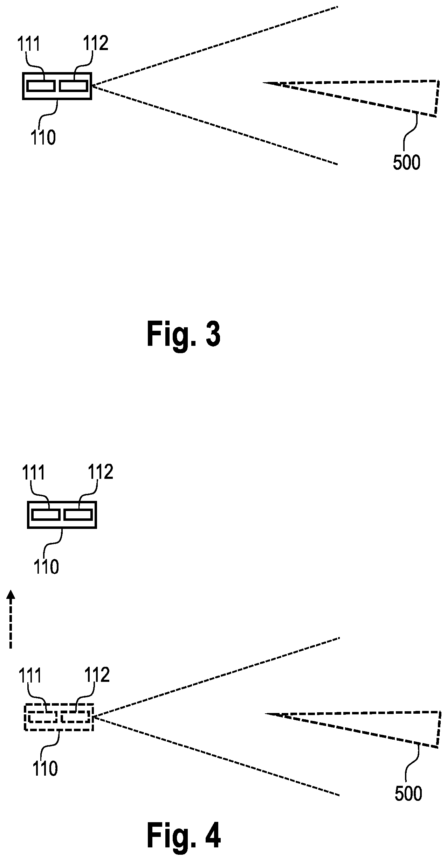

Fig. 3 und Fig. 4 zeigen den wenigstens einen Täuschkörper 110 nach seinem Absetzen von dem Satelliten 200, 200' sowie beim Entgegenwirken gegen das Zielobjekt 500. In Fig. 4 ist angedeutet, dass sich der wenigstens eine Täuschkörper 110 auch von seiner Absetzposition entfernen kann. In Fig. 4 ist der in gestrichelten Linien dargestellte Täuschkörper 110 in seiner ursprünglichen Position bzw. dort, wo er von dem Satelliten 200, 200' aus abgesetzt wurde, angeordnet, und der mit durchgezogenen Linien dargestellte Täuschkörper 110 hat sich von dieser Position entfernt, was durch einen Pfeil angedeutet ist.

In zumindest einigen Ausführungsbeispielen kann der wenigstens eine Täuschkörper 110 wenigstens ein elektronisches Störmittel 111, insbesondere wenigstens einen Störsender (engl. Jammer), aufweisen. Das wenigstens eine Störmittel 111, z.B. Störsender, kann dazu eingerichtet sein, das Zielobjekt 500 zu stören, wie dies in Fig. 3 und Fig. 4 jeweils durch ein gestrichelt angedeutetes Sichtfeld bzw. Wirkfeld des wenigstens einen Störmittels 111 angedeutet ist. Das wenigstens eine Störmittel 111 kann als elektronische Gegenmaßnahme gegen das Zielobjekt dienen. Beispielsweise kann das wenigstens eine Störmittel 111 dazu eingerichtet sein, elektromagnetische Wellen auszusenden, beispielsweise in den Spektralbereichen Radar, IR und/oder UV, oder dergleichen. Zudem kann das wenigstens eine Störmittel 111 dazu eingerichtet sein, zumindest eines von einem Kommunikationssystem, einem Navigationssystem, wie etwa GPS oder dergleichen, und einem Suchkopf zu stören. Des Weiteren kann das wenigstens eine Störmittel 111 dazu eingerichtet sein, eine Fernzündung eines Sprengstoffs oder dergleichen des Zielobjekts 500 zu stören.

Alternativ oder zusätzlich dazu, kann der wenigstens eine Täuschkörper 110 in zumindest einigen Ausführungsbeispielen wenigstens eine Blendeinrichtung 112 aufweisen. Die wenigstens eine Blendeinrichtung 112 kann dazu eingerichtet sein, das Zielobjekt 500 zu blenden. Beispielsweise kann die wenigstens eine Blendeinrichtung 112 dazu eingerichtet sein, das Zielobjekt 500 und/oder Komponenten desselben im IR-Spektralbereich und/oder optisch zu blenden. Die wenigstens eine Blendeinrichtung 112 kann beispielsweise einen Laser oder dergleichen aufweisen.

Fig. 5 zeigt eine weitere exemplarische Ausgestaltung der Vorrichtung 100 bzw. des Systems 10.

Demgemäß wird die Vorrichtung 100 und/oder der wenigstens eine Täuschkörper 110 nicht von dem zu schützenden bzw. zu verteidigenden Satelliten 200 getragen, sondern von einem dedizierten, zweiten Satelliten 200'. Von dort aus kann der wenigstens eine Täuschkörper 110 zur Verteidigung des zu schützenden bzw. zu verteidigenden, ersten Satelliten 200 abgesetzt werden.

Fig. 6 zeigt schematisch einen exemplarischen Täuschkörper 110.

Demgemäß kann der wenigstens eine Täuschkörper 110 beispielsweise ein Raumfahrzeug, eine Raumsonde, oder dergleichen sein. Der Täuschkörper 110 kann eine weltraumtaugliche Struktur 130 aufweisen, die u.a. auch zum Tragen des wenigstens einen Störmittels 111 und/oder der wenigstens einen Blendeinrichtung 112 geeignet ist. Zudem kann der Täuschkörper 110, z.B. ein Lagekontrollsystem 140, z.B. ein Attitude Determination and Control System (ACS), aufweisen, das zur Steuerung der Orientierung, Lage oder dergleichen des Täuschkörpers 110 in Bezug auf einen Bezugsrahmen oder eine andere Entität wie beispielsweise die Himmelskugel, bestimmte Felder, nahe gelegene Objekte usw. eingerichtet ist. Es kann z.B. wenigstens einen Sensor, wenigstens einen Aktuator zum Aufbringen eines Moments zum Erreichen einer bestimmten Höhe, eine elektronische Steuerung oder dergleichen aufweisen. Des Weiteren kann der Täuschkörper 110 in zumindest einigen Ausführungsbeispielen einen bordeigenen Antrieb 150, z.B. wenigstens ein Triebwerk oder dergleichen, und wenigstens eines der folgenden Mittel 160 aufweisen: eine bordeigene Energieversorgung, z.B. Photovoltaik, eine Batterie oder dergleichen, ein bordeigenes Steuersystem, z.B. mit wenigstens einem Zusatztriebwerk oder dergleichen, das dazu eingerichtet ist, den Täuschkörper 110 zu steuern und/oder zu manövrieren, eine bordeigene Recheneinrichtung, wie etwa einen Computer, Prozessor, oder dergleichen, ein Kommunikationssystem, ein System zur Führung, Navigation und Steuerung, z.B. ein Guidance Navigation and Control (GNC) System. Des Weiteren kann der Täuschkörper 110 in zumindest einigen Ausführungsbeispielen wenigstens einen Suchkopf 170 (engl. Seeker) aufweisen.

Es sei angemerkt, dass die Anordnung und/oder die Ausgestaltung der Komponenten der Vorrichtung 100 bzw. des Täuschkörpers 110, d.h. des wenigstens einen Störmittels 111 und/oder der wenigstens einen Blendeinrichtung 112, der Struktur 130, des Lagekontrollsystems 140, z.B. Attitude Determination and Control System (ACS), des wenigstens einen Triebwerks 150 und des Suchkopfes 170, gemäß Fig. 5 lediglich exemplarisch ist und auch andere Anordnungen und/oder Ausgestaltungen möglich sind. Beispielsweise kann die jeweilige Anordnung und/oder Ausgestaltung auftrags- oder missionsabhängig gewählt werden.

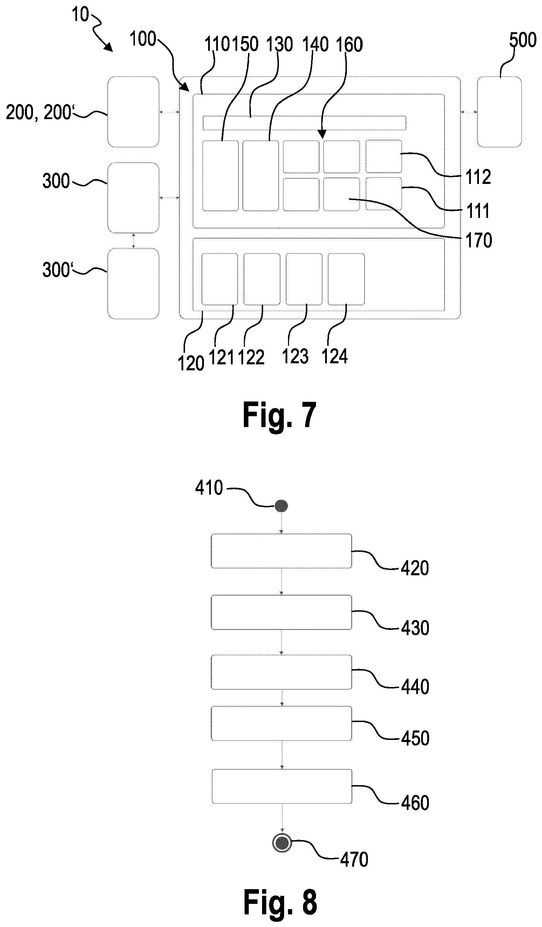

Fig. 7 zeigt in einem Blockdiagramm eine exemplarische Ausgestaltung des Systems 10 zum Verteidigen des Satelliten 200 gegen das Zielobjekt 500 im Weltraum.

Das System 10 weist die Vorrichtung 100 auf, die gemäß einem oder mehreren der hierin beschriebenen Ausführungsbeispielen ausgebildet sein kann.

Das System 10 weist zudem wenigstens eine Erfassungseinrichtung 300, 300' auf, die dazu eingerichtet ist, das Zielobjekt zum Erzeugen von Zieldaten zu erfassen. Die wenigstens eine Erfassungseinrichtung 300, wie etwa ein Sensor, ein Sensornetzwerk oder dergleichen, kann dazu eingerichtet sein, die Zieldaten basierend auf Beobachtungen aus dem Weltraum und/oder von der Erde aus zu erzeugen. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden, das mit 300' bezeichnet ist. Die Zieldaten können beispielsweise auch einen Treffpunkt, Abfangpunkt oder dergleichen des Täuschkörpers 110 mit dem Zielobjekt 500 angeben, der beispielsweise basierend auf Daten der Erfassungseinrichtung, z.B. auch unter Einbeziehung astronomischen Wissens, berechnet werden kann.

In zumindest einigen Ausführungsbeispielen weist die Vorrichtung 100 die wenigstens eine Startvorrichtung 120 auf. Wie oben erwähnt, kann die wenigstens eine Startvorrichtung 120 an dem Satelliten 200, 200' fest angeordnet und dazu eingerichtet sein, den wenigstens einen Täuschkörper 110 abzusetzen, z.B. auszustoßen oder dergleichen. Die wenigstens eine Startvorrichtung 120 kann wenigstens eines von einem Startplatz 121 für den wenigstens einen Täuschkörper 110, eine Kommunikationseinrichtung 122, ein Triebwerk 123 und einem Tank 124 oder dergleichen für Treibstoff aufweisen.

Weiter beispielweise kann das System 10 ferner einen dezidierten, zweiten Satelliten 200' aufweisen, der zusätzlich zu dem zu schützenden bzw. zu verteidigenden Satelliten 200 vorgesehen sein kann. Der Satellit 200, 200' kann dazu eingerichtet sein, den Täuschkörper 110 zu tragen, wobei der Täuschkörper 110 von dem Satelliten aus hin zu dem Zielobjekt 500 startbar ist.

Fig. 8 illustriert in einem Flussdiagramm mögliche Aktivitäten bezogen auf die Vorrichtung 100 und/oder den Täuschkörper 110 in der Startvorrichtung 120.

Beginnend bei Block 410 befindet sich der wenigstens eine Täuschkörper 110 in der Startvorrichtung 120. Bei Block 420 gibt ein Bediener, z.B. ein Bediener des C2-Systems, einen Bekämpfungsbefehl. Gemäß Block 430 kann die bordeigene Energieversorgung des Täuschkörpers 110 aktiviert werden. Bei Block 440 kann eine Arretierung für den Täuschkörper 110 in der Startvorrichtung 120 deaktiviert, z.B. gelöst, werden. Gemäß Block 450 wird der Täuschkörper 110 mittels seines Antriebs 150 beschleunigt. Bei Block 460 etabliert der Täuschkörper 110 seine Kommunikation. Bei Block 470 befindet sich der Täuschkörper 110 außerhalb der Startvorrichtung 120.

### BEZUGSZEICHENLISTE

- 10: System
- 100: Vorrichtung
- 110: Täuschkörper
- 111: Störmittel
- 112: Blendeinrichtung
- 120: Startvorrichtung
- 121: Startplatz
- 122: Kommunikationseinrichtung
- 123: Triebwerk
- 124: Tank
- 130: Struktur
- 140: Lagekontrollsystem, z.B. Attitude Determination and Control System (ACS)
- 150: Antrieb
- 160: Mittel
- 170: Suchkopf
- 200: Satellit
- 200': Satellit
- 300: Erfassungseinrichtung
- 300': Erfassungseinrichtung
- 410-470: Block von Flussdiagramm
- 500: Zielobjekt

## Patentansprüche

1. Vorrichtung (100) zur Verteidigung eines Satelliten (200), aufweisend wenigstens einen Täuschkörper (110), der als Raumflugkörper ausgeführt sowie von dem Satelliten (200) oder einem zweiten dedizierten Satelliten (200') tragbar ist, und basierend auf Zieldaten, die ein sich auf den zu verteidigenden Satelliten (200) zubewegendes Zielobjekt (500) angeben, von dem Satelliten (200, 200') aus absetzbar ist, und der dazu eingerichtet ist, dem Zielobjekt (500) entgegenzuwirken, und wenigstens eine triebwerkgetriebene Startvorrichtung (120), die an dem Satelliten (200, 200') fest verbindbar ist und dazu eingerichtet ist, den wenigstens einen Täuschkörper (110) abzusetzen, **dadurch gekennzeichnet, dass** die Vorrichtung (100) dazu eingerichtet ist, die wenigstens eine Startvorrichtung (120) über das Absetzen des wenigstens einen Täuschkörpers (110) hinaus als Antrieb für den Satelliten (200, 200') weiter zu betreiben.

2. Vorrichtung nach Anspruch 1, wobei der wenigstens eine Täuschkörper (110) wenigstens ein elektronisches Störmittel (111) aufweist, das dazu eingerichtet ist, das Zielobjekt (500) zu stören.

3. Vorrichtung nach Anspruch 1 oder 2, wobei der wenigstens eine Täuschkörper (110) eine Blendeinrichtung (112) aufweist, die dazu eingerichtet ist, das Zielobjekt (500) zu blenden.

4. Vorrichtung nach einem der vorhergehenden Ansprüche, wobei der wenigstens eine Täuschkörper (110) ein bordeigenes Antriebssystem (140, 150) aufweist.

5. Vorrichtung nach einem der vorhergehenden Ansprüche, ferner aufweisend eine Kommunikationseinrichtung (122), die dazu eingerichtet ist, als Kommunikations-Relay zwischen dem Täuschkörper (110) und dem Satelliten (200, 200') zu dienen.

6. Vorrichtung nach einem der vorhergehenden Ansprüche, wobei der Täuschkörper (110) wenigstens einen Suchkopf (170) aufweist und dazu eingerichtet ist, sich mittels des Suchkopfes (170) zielgeführt zu dem Zielobjekt (500) zu positionieren und/oder auszurichten.

7. Verwendung einer Vorrichtung (100) zur Verteidigung eines Satelliten (200), wobei wenigstens ein Täuschkörper (110), der als Raumflugkörper ausgeführt ist, von dem Satelliten (200) oder einem zweiten dedizierten Satelliten (200') getragen wird und basierend auf Zieldaten, die ein sich auf den zu verteidigenden Satelliten (200) zu bewegendes Zielobjekt (500) angeben, von dem Satelliten (200, 200') aus abgesetzt wird, um dem Zielobjekt (500) entgegenzuwirken, wobei die Vorrichtung (100) wenigstens eine triebwerkgetriebene Startvorrichtung (120) aufweist, die an dem Satelliten (200, 200') fest angeordnet und dazu eingerichtet ist, den wenigstens einen Täuschkörper (110) abzusetzen, und die Vorrichtung (100) dazu eingerichtet ist, die wenigstens eine Startvorrichtung (120) über das Absetzen des wenigstens einen Täuschkörpers (110) hinaus als Antrieb für den Satelliten (200, 200') weiter zu betreiben.

8. Verwendung nach Anspruch 7, wobei der wenigstens eine Täuschkörper (110) von dem dedizierten, zweiten Satelliten (200') getragen und von dort aus zur Verteidigung des zu verteidigenden, ersten Satelliten (200) abgesetzt wird.

9. Verwendung nach Anspruch 7, wobei der Täuschkörper (110) von dem zu verteidigenden Satelliten (200) getragen wird.

10. System (10) zur Verteidigung eines Satelliten (200), aufweisend:
die Vorrichtung (100) nach einem der Ansprüche 1 bis 6, und wenigstens eine Erfassungseinrichtung (300, 300'), die dazu eingerichtet ist, das Zielobjekt (500) zum Erzeugen von Zieldaten zu erfassen.

## Claims

1. Device (100) for defending a satellite (200), comprising
at least one decoy (110), which is designed as a spacecraft and can be carried by the satellite (200) or a second dedicated satellite (200'), and based on target data that indicates a target object (500) that is moving towards the satellite (200) to be defended, can be deployed by said satellite (200, 200'), and which is configured so as to counteract the target object (500), and at least one propulsion unit-driven launching device (120) that can be fixedly connected to the satellite (200, 200') and is configured so as to deploy the at least one decoy (110),
**characterised in that** the device (100) is configured so as to continue operating the at least one launching device (120) as a drive for the satellite (200, 200') after deploying the at least one decoy (110).

2. Device according to claim 1, wherein the at least one decoy (110) comprises at least one electronic interference means (111) that is configured so as to interfere with the target object (500).

3. Device according to claim 1 or 2, wherein the at least one decoy (110) comprises a dazzling device (112) that is configured so as to dazzle the target object (500).

4. Device according to one of the preceding claims, wherein the at least one decoy (110) comprises an on-board drive system (140, 150).

5. Device according to one of the preceding claims, further comprising a communication device (122) that is configured so as to serve as a communication relay between the decoy (110) and the satellite (200, 200').

6. Device according to one of the preceding claims, wherein the decoy (110) comprises at least one seeker head (170) and is configured so as to position and/or orient itself in a targeted manner with respect to the target object (500) by means of the seeker head (170).

7. Use of a device (100) for defending a satellite (200), wherein at least one decoy (110), which is designed as a spacecraft is carried by the satellite (200) or a second dedicated satellite (200'), and based on target data that indicates a target object (500) that is moving towards the satellite (200) to be defended, is deployed by said satellite (200, 200'), in order to counteract the target object (500), the device (100) comprising at least one propulsion unit-driven launching device (120) that is fixedly arranged on the satellite (200, 200') and is configured so as to deploy the at least one decoy (110), and the device (100) being configured so as to continue operating the at least one launching device (120) as a drive for the satellite (200, 200') after deploying the at least one decoy (110).

8. Use according to claim 7, wherein the at least one decoy (110) is carried by the dedicated, second satellite (200') and is deployed from there in order to defend the first satellite (200) that is to be defended.

9. Use according to claim 7, wherein the decoy (110) is carried by the satellite (200) to be defended.

10. System (10) for defending a satellite (200), comprising:
the device (100) according to one of claims 1 to 6, and
at least one detecting device (300, 300') that is configured so as to detect the target object (500) so as to generate target data.

## Revendications

1. Dispositif (100) de défense d'un satellite (200), présentant au moins un leurre (110) qui est réalisé sous la forme d'un engin spatial et peut être emporté par le satellite (200) ou par un deuxième satellite dédié (200'), et qui, sur la base de données de cible indiquant un objet cible (500) se dirigeant vers le satellite à défendre (200), peut être largué à partir du satellite (200, 200') et est conçu pour contrer l'objet cible (500), et
au moins un dispositif de lancement propulsé (120) qui peut être relié de manière rigide au satellite (200, 200') et est conçu pour larguer ledit au moins un leurre (110),
**caractérisé en ce que** le dispositif (100) est conçu pour continuer à faire fonctionner ledit au moins un dispositif de lancement (120) comme moyen de propulsion pour le satellite (200, 200') au-delà du largage dudit au moins un leurre (110).

2. Dispositif selon la revendication 1, dans lequel ledit au moins un leurre (110) présente au moins un moyen de brouillage électronique (111) qui est conçu pour brouiller l'objet cible (500).

3. Dispositif selon la revendication 1 ou 2, dans lequel ledit au moins un leurre (110) présente un équipement d'éblouissement (112) qui est conçu pour éblouir l'objet cible (500).

4. Dispositif selon l'une des revendications précédentes, dans lequel ledit au moins un leurre (110) présente un système de propulsion embarqué (140, 150).

5. Dispositif selon l'une des revendications précédentes, présentant en outre un équipement de communication (122) qui est conçu pour servir de relais de communication entre le leurre (110) et le satellite (200, 200').

6. Dispositif selon l'une des revendications précédentes, dans lequel le leurre (110) présente au moins une tête chercheuse (170) et est conçu pour se positionner et/ou s'orienter de manière guidée vers l'objet cible (500) à l'aide de la tête chercheuse (170).

7. Utilisation d'un dispositif (100) de défense d'un satellite (200), dans laquelle au moins un leurre (110) qui est réalisé sous la forme d'un engin spatial, peut être emporté par le satellite (200) ou par un deuxième satellite dédié (200'), et qui, sur la base de données de cible indiquant un objet cible (500) se dirigeant vers le satellite à défendre (200), peut être largué à partir du satellite (200, 200') afin de contrer l'objet cible (500), le dispositif (100) présentant au moins un dispositif de lancement propulsé (120) qui est disposé de manière rigide sur le satellite (200, 200') et est conçu pour larguer ledit au moins un leurre (110), et le dispositif (100) étant conçu pour continuer à faire fonctionner ledit au moins un dispositif de lancement (120) comme moyen de propulsion pour le satellite (200, 200') au-delà du largage dudit au moins un leurre (110).

8. Utilisation selon la revendication 7, dans laquelle ledit au moins un leurre (110) est emporté par le deuxième satellite dédié (200') et est largué à partir de celui-ci pour défendre le premier satellite (200) à défendre.

9. Utilisation selon la revendication 7, dans laquelle le leurre (110) est emporté par le satellite (200) à défendre.

10. Système (10) de défense d'un satellite (200), présentant :
le dispositif (100) selon l'une des revendications 1 à 6, et
au moins un équipement de détection (300, 300') qui est conçu pour détecter l'objet cible (500) afin de générer des données de cible.
